# EUROPÄISCHE PATENTSCHRIFT

(11) **EP 0 741 066 B1**
(45) Veröffentlichungstag und Bekanntmachung des Hinweises auf die Patenterteilung: **27.09.2000**
(21) Anmeldenummer: 96106695.8
(22) Anmeldetag: 27.04.1996
(51) Int. Cl.: B60T 7/12

(54) **Kraftfahrzeug mit einer Betriebs- und einer Feststellbremsanlage**
Motor vehicle with a service and a parking brake installation
Véhicule à moteur ayant une installation de freinage de service et de stationnement

(30) Priorität: 05.05.1995 DE 19516639
(43) Veröffentlichungstag der Anmeldung: 06.11.1996
(73) Patentinhaber: Bayerische Motoren Werke Aktiengesellschaft, 80788 München (DE)
(72) Erfinder: Siepker, Achim, 80804 München (DE)

(56) Entgegenhaltungen:
- EP-A- 0 519 042
- DE-A- 1 755 967
- DE-A- 3 113 362
- DE-A- 3 544 965
- DE-A- 4 129 919
- FR-A- 941 243

## Beschreibung

Die Erfindung bezieht sich auf ein Kraftfahrzeug mit einer Betriebs- und einer Feststellbremsanlage nach dem Oberbegriff des Anspruchs 1.

Bremsanlagen von Kraftfahrzeugen haben allgemein drei Funktionen (Betriebs-, Feststell- und Hilfsbremsfunktion) zu erfüllen. Kraftfahrzeuge, insbesondere Personenkraftwagen, weisen hierzu in der Regel zwei voneinander unabhängige Bremsanlagen auf. Der Bremsdruck des Betriebsbremssystems wird über ein Pedal aufgebracht, während die Feststellbremse über einen Handhebel oder ein weiteres Pedal betätigt wird. Wenigstens einem der beiden Bremssysteme kommt darüber hinaus im Bedarfsfall noch die Funktion einer Hilfsbremsanlage zu.

In der Regel handelt es sich bei dem Betriebsbremssystem von Personenkraftwagen um eine hydraulische Bremsanlage, während die Feststellbremskraft z. B. über einen Bowdenzug übertragen wird. Die vorliegende Erfindung umfaßt jedoch auch Betriebsbremsanlagen, die rein elektrisch arbeiten, indem Elektromotore an den Radbremsen durch Zustellen der Reibbeläge auf die Bremsscheiben den "Bremsdruck" direkt aufbringen.

Gemäß dem "Kraftfahrtechnischen Taschenbuch", Robert Bosch GmbH, 19. Auflage, Seite 500 ff, dient die Betriebsbremse dazu, während des normalen Fahrzeug betriebes die Geschwindigkeit zu verringern oder das Fahrzeug zum Stillstand zu bringen. Die Betriebsbremsanlage ist zwei- oder mehrkreisig ausgeführt. Bei Ausfall eines Bremskreises übernimmt der jeweils intakt gebliebene Bremskreis die Funktion der Hilfsbremse.

Die Feststellbremsanlage hingegen dient dazu, das Fahrzeug im Stillstand zu halten, auch auf geneigter Fahrbahn und insbesondere bei Abwesenheit des Fahrzeugführers.

Besitzen (wie oben beschrieben) Betriebs- und Hilfsbremsanlage eine gemeinsame Betätigungseinrichtung (Pedal), so schreiben gesetzliche Bestimmungen vor, daß eine Betätigung der Feststellbremse auch während der Fahrt möglich sein muß, um eine definierte Mindestabbremsung erzielen zu können, wenn die Betriebsbremse komplett ausfällt. Im Vergleich zur Betriebsbremsanlage bestehen für die Hilfsbremsfunktion der Feststellbremsanlage (nachfolgend "Notbremsfunktion" genannt) geringere Anforderungen. Die Notbremsfunktion wird beispielsweise benötigt, wenn das Pedal der Betriebsbremsanlage versagt oder ein Gegenstand unter dem Pedal zu liegen kommt, so daß der Betätigungsweg des Pedales blockiert ist.
Die drei beschriebenen Bremsanlagen können gemeinsame Teile aufweisen; es müssen jedoch mindestens zwei voneinander unabhängige Betätigungseinrichtungen vorhanden sein. Unter einer Betätigungseinrichtung ist in diesem Zusammenhang entweder eine Krafteinleitungseinrichtung (Pedal, Handhebel) oder eine Fremdkrafteinrichtung (z. B. elektrischer Schalter oder Regler in Verbindung mit einem Elektromotor zur Bremsenbetätigung) zu verstehen.

Bei bekannten Personenkraftwagen kann das Fahrzeug bei Störung oder Ausfall der gemeinsamen Betätigungseinrichtung von Betriebs- und Hilfsbremse über die Betätigungseinrichtung der Feststellbremsanlage abgebremst werden.
Die Feststellbremsanlage wirkt hierbei - in analoger Weiterführung der oben vorgenommenen Begriffsbestimmung - als "Notbremsanlage". Die Begriffe "Notbremsung", "Notbremsfunktion" und "Notbremsanlage" werden aus Gründen der Klarheit im Rahmen der vorliegenden Erfindung zur Abgrenzung gegenüber der Hilfsbremsfunktion der Betriebsbremsanlage verwendet. Gemäß der Terminologie des "Krafttechnischen Taschenbuchs" umfaßt die Hilfsbremsanlage allgemein jedoch auch die als Notbremsanlage wirkende Feststellbremsanlage.

Nachteilig bei dem bekannten Stand der Technik ist, daß die Feststellbremsanlage nicht nur auf ihre eigentliche Funktion, nämlich das Festhalten des Fahrzeuges im Stillstand, sondern auch auf die gesetzlich vorgeschriebene Verzögerung bei Betätigung während der Fahrt (Notbremsfunktion) hin ausgelegt werden muß. Dies erfordert Kompromisse, die sowohl in technischer als auch in wirtschaftlicher Hinsicht nicht zufriedenstellend sind.

Ferner ist aus der DE 35 44 965 A1 eine Bremsanlage, insbesondere für ein Nutzfahrzeug, bekannt, mit einem Notbremsventil, das bei Ausfall der Steuerelektronik der Betriebsbremse über einen Betätigungsgriff angesteuert werden kann, um eine Notbremsung einzuleiten.

Aufgabe der Erfindung ist es, die aus der DE 35 44 965 A1 bekannte Bremsanlage insbesondere für einen Personenkraftwagen weiterzubilden.

Diese Aufgabe wird bei einem gattungsgemäßen Kraftfahrzeug durch die Merkmale des Anspruchs 1 gelöst.

Bei einer fremdkraftbetätigten Feststellbremse ist erfindungsgemäß eine gemeinsame Ansteuerungs-/Betätigungseinrichtung für die Notbrems- und Feststellbremsanlage vorgesehen, die mit Hilfe einer Logikschaltung je nach Betriebszustand des Fahrzeugs unterschiedliche Funktionen erfüllt. Die Logikschaltung leitet bei v > 0 durch die Ansteuerung des Druckerzeugers eine Notbremsung ein, während bei v = 0 die Fremdkrafteinrichtung der Feststellbremse aktiviert wird.

Bei muskelkraftbetätigten Feststellbremsanlagen liefert der Handbremshebel bzw. das Feststellpedal in analoger Weise ein Signal für dieAnsteuerungseinrichtung der Notbremsanlage. Hierzu ist ein Schaltelement vorzusehen, das bereits in der Anfangsphase der Betätigung des Hebels bzw. Pedals betätigt wird und bei v > 0 eine Notbremsung einleitet. Bei muskelkraftbetätigten Feststellbremsanlagen ist eine Sperreinrichtung für die weitere Betätigung des Hebels bzw. Pedals von Vorteil, um ein die Stabilität des Fahrzeugs beeinträchtigendes Überbremsen derjenigen Achse des Fahrzeugs zu vermeiden, auf die die Feststellbremse wirkt.

Die Kombination des Hebels bzw. des Pedals der Feststellbremsanlage mit derAnsteuerungseinrichtung ist besonders vorteilhaft, da hierbei kein Umdenken des Fahrzeugführers erforderlich ist. In einer Notsituation kann der Fahrzeugführerreflexartig in gewohnter Weise auf den Hebel bzw. das Pedal zugreifen und die Notbremsung einleiten.

Bei einem Kraftfahrzeug nach Anspruch 1 sind Feststell- und Notbremsfunktion voneinander entkoppelt.
Diese Entkoppelung kann teilweise oder vollständig erfolgen.
Bei der teilweisen Entkoppelung tritt an die Stelle der Betätigungseinrichtung für die Feststellbremse die erfindungsgemäße Kombination aus Ansteuerungseinrichtung und Druckerzeuger. Im Fall einer Notbremsung wird somit nicht mehr auf den Handbremshebel bzw. das Feststellpedal zurückgegriffen. Daraus ergibt sich der Vorteil, daß die genannten Betätigungseinrichtungen ausschließlich auf ihre eigentliche Funktion, nämlich das Einleiten und Halten der Feststellkraft, ausgelegt werden können.

Bei der vollständigen Entkoppelung wird darüber hinaus bei Notbremsungen auch nicht mehr auf die der Feststellbremsanlage zugeordnete Reibungsbremse zurückgegriffen. Dies bringt den zusätzlichen Vorteil, daß neben den Betätigungseinrichtungen auch die eigentlichen Bremsenorgane (Reibbeläge, Bremstrommel bzw. Bremsscheibe, Kolben, Gestänge etc.) der Feststellbremsanlage optimal auf ihre spezifischen Anforderungen hin ausgelegt werden können.
Für die Notbremsanlage wird in der Regel eine eigene, von den Betätigungseinrichtungen der Betriebs- und Feststellbremse unabhängige Ansteuerungseinrichtung vorzusehen sein, die aber durchaus in der Nähe der beiden anderen Betätigungseinrichtungen angeordnet sein kann. Da die Notbremsanlage gemäß der Erfindung im Sinne einer Fremdkraft-, zumindest aber einer Servobremsanlage wirkt, braucht ihre Ansteuerungseinrichtung keine oder nur sehr geringe Kräfte zu übertragen und kann entsprechend klein ausgeführt werden, beispielsweise als elektrischer Taster oder Regler, der wenig Platz beansprucht und in vorteilhafter Weise an geeigneter Stelle angeordnet werden kann.

Besonders vorteilhaft ist es, wenn als Druckerzeuger eine Einrichtung verwendet wird, die im Fahrzeug sowieso schon vorhanden ist und auf diese Art und Weise kosten-, gewichts- und platzsparend als Fremdkraftquelle mitgenutzt werden kann. Dies ist bei der Weiterbildung der Erfindung nach Anspruch 2 der Fall, die gleichermaßen für hydraulische wie elektrische Bremsanlagen anwendbar ist. Bei hydraulischen Bremsanlagen ist der Druckerzeuger ein Aggregat zur Erzeugung von Flüssigkeitsdruck (Anspruch 3 bis 5), während bei elektrischen Betriebsbremsanlagen (Anspruch 6) für Notbremsungen auf einen oder mehrere Elektromotore zur "Bremsdruckerzeugung" zurückgegriffen wird - unter Umgehung des Pedals der Betriebsbremsanlage und anstelle der z. B. bowdenzugbetätigten Feststellbremse.

Der Druckerzeuger der Betriebsbremsanlage kann auf die Bremsorgane der Räder einer oder aber auch beider (mehrerer) Achsen wirken. Bei Notbremsungen über alle Räder des Fahrzeugs - wie dies auch bei einer Betriebsbremsung der Fall ist - ergeben sich im Vergleich zur Notbremsung über die Feststellbremsanlage, die in der Regel nur auf die Räder einer Achse wirkt, deutlich höhere Verzögerungen. Auch bleibt die Stabilität des Fahrzeugs, im Gegensatz zu Notbremsungen nur über die Feststellbremsorgane an der Hinterachse eines Fahrzeugs, erhalten. Darüber hinaus kann an allen bzw. auch nur an einem Teil der Räder des Fahrzeugs ein Bremsregelsystem zur schlupffreien Abbremsung installiert bzw. von der Betriebsbremsanlage übernommen werden (Anspruch 8).

Gemäß Anspruch 3 greift die Notbremsanlage auf ein vorhandenes Bremsgerät, einen sogenannten Bremskraftverstärker, zurück. Bremskraftverstärker sind "Servo-Einrichtungen" und unterstützen unter Nutzung des Unterdrucks aus dem Ansaugtrakt einer Verbrennungsmaschine (bzw. einer separaten Vakuumpumpe bei Dieselmotoren) den Fahrzeugführer, so daß die erforderliche Pedalkraft zur Aktivierung der Betriebsbremse deutlich heruntergesetzt wird. Für die Weiterbildung der Erfindung ist ein sogenanntes "fremdansteuerbares Bremsgerät" vorzusehen, das unabhängig vom Pedal der Betriebsbremsanlage durch ein eigenes, beispielsweise elektromagnetisches Ventil über die oben beschriebene Ansteuerungseinrichtung der Hilfsbremsanlage angesteuert werden kann. Hierdurch wird eine Seite des Arbeitskolbens im Bremsgerät mit Atmosphärendruck beaufschlagt, wodurch unter Umgehung der Betätigungseinrichtung für die Betriebsbremsanlage Bremsdruck im Betriebsbremssystem aufgebaut wird. Gegebenenfalls ist hierbei eine Entkoppelung zwischen Bremsgerät und Pedal derart vorzusehen, daß auch bei einer Blockierung des Pedals das Bremsgerät angesteuert werden kann.

Damit wird in besonders vorteilhafter Weise die Krafteinleitungskette bis zum Bremsgerät umgangen und auf die zwei- oder mehrkreisig ausgeführte Betriebsbremsanlage zurückgegriffen. Es liegt dabei eine vollständige Entkoppelung der Notbremsanlage von der Feststellbremsanlage vor. Diese erfindungsgemäße Lösung zeichnet sich durch ihren geringen zusätzlichen Aufwand aus, da mit nur geringen Modifikationen auf einen vorhandenen Druckerzeuger sowie das Leitungssystem und die Bremsenorgane der Betriebsbremsanlage zurückgegriffen werden kann. Selbstverständlich kann jedoch an das fremdansteuerbare Bremsgerät ein eigener Hydraulikkreis für die Notbremsanlage angeschlossen sein, was jedoch zusätzlichen Aufwand verursacht.

Auch die Weiterbildungen der Erfindung nach Anspruch 4 und 5 greifen auf druckerzeugende Aggregate der Betriebsbremsanlage zurück und bringen damit die oben angeführten Vorteile mit sich.

"Zentralhydraulikanlagen" gemäß Anspruch 4 versorgen z. B. sowohl die Betriebsbremsanlage als auch die Lenkung und "aktive Fahrwerksteile" mit Flüssigkeitsdruck. Durch entsprechende Ansteuerung kann, wie bereits oben ausgeführt, der mögliche Schwachpunkt des Pedals der Betriebsbremsanlage umgangen werden und die Zentralhydraulik als Druckquelle für die Notbremsanlage genützt werden, indem eine eigene Ansteuerungseinrichtung hierfür vorgesehen wird. Hierdurch ergibt sich eine besonders kostengünstige und platzsparende Lösung.
Neben Zentralhydraulikanlagen zur Druckversorgung unterschiedlicher Aggregate (Bremsanlage, Lenkung etc.) ist selbstverständlich auch ein Bremssystem möglich, das mit einem hydraulischen Druckspeicher arbeitet, dessen hydraulische Energie ausschließlich zum Aufbau von Bremsdruck in der Betriebsbremsanlage eingesetzt wird. Ein solcher Druckspeicher bildet z. B. zusammen mit einer elektromotorisch angetriebenen Pumpe einen Druckerzeuger. Die Weiterleitung des Flüssigkeitsdrucks an die Radbremse erfolgt beispielsweise über elektromagnetische Ventile, die über das Pedal der Betriebsbremsanlage rein elektrisch angesteuert werden ("brake by wire"). Zur Absicherung des Ausfalls oder der Blockierung des Pedals der Betriebsbremsanlage kann die Notbremsfunktion erfindungsgemäß durch eine Ansteuerungseinrichtung, die direkt auf den Druckspeicher wirkt, realisiert werden. Hierdurch ergibt sich ebenfalls eine besonders einfache und kostengünstige Lösung.

Gleiches gilt sowohl für die in Anspruch 5 beschriebene "ASC-Pumpe", die im Normalfahrbetrieb des Kraftfahrzeuges dazu verwendet wird, durchdrehende Räder abzubremsen, als auch für die Pumpe einer "fahrdynamischen Regelungsanlage (FDR)" zur Abbremsung nicht angetriebener Räder.

Alle Druckerzeuger gemäß den Ansprüchen 2 bis 5 stellen für Notbremsungen mehr als ausreichend Bremsdruck zur Verfügung, so daß in der Regel eine Druckreduzierung erforderlich sein wird (Anspruch 7).

Der Antrieb des Druckerzeugers (wobei hiervon gleichermaßen Aggregate der Betriebsbremsanlage wie auch abweichend von Anspruch 2 eigene Druckerzeuger für die Notbremsanlage umfasst sind) kann gemäß Anspruch 9 über den Verbrennungsmotor erfolgen, z. B. über Zahnräder, Ketten, Riemen etc.
Alternativ wird gemäß Anspruch 10 ein elektrischer Antrieb des Druckerzeugers vorgeschlagen. Elektrisch angetriebene Hydraulikpumpen zeichnen sich durch ihren einfachen Aufbau und ihre Unabhängigkeit vom Verbrennungsmotor hinsichtlich der Anordnung aus.
Rein elektrische Bremsanlagen arbeiten prinzipbedingt mit vom Verbrennungsmotor unabhängigen Elektromotoren (Anspruch 6).

Es sind selbstverständlich noch weitere Möglichkeiten denkbar, auf vorhandene oder eigene Druckquellen zurückzugreifen. Entscheidend ist jeweils die Entkoppelung von Notbremsfunktion und Feststellanlage. Damit kann für die Auslegung der Feststellbremsanlage alleine deren eigentliche Feststellfunktion zugrunde gelegt werden, ohne Rücksicht auf die Funktion "Notbremsung" nehmen zu müssen. Die nachfolgend angeführten Weiterbildungen der Erfindung basieren auf dieser vorgenommenen Trennung der beiden Bremsfunktionen.

Da sich die Feststellfunktion auf den Stillstand des Fahrzeuges beschränkt, genügt nach Anspruch 11 zur Erfüllung dieser Feststellfunktion eine Sperre im Antriebsstrang des Kraftfahrzeuges, die im aktivierten Zustand eindeutig blockiert und im gelösten Zustand eindeutig freigibt (Ein-/Aus-Funktion). Die gesetzlichen Bestimmungen sind beim Einsatz einer derartigen Sperreinrichtung selbstverständlich zu beachten. Die Sperreinrichtung kann sich an beliebiger Stelle im Antriebsstrang befinden. Vorteilhafterweise wird sie in an sich bekannter Weise z. B. in ein Automatikgetriebe integriert. Sie kann jedoch auch selbstverständlich Bestandteil eines Schalt- oder Hinterachsgetriebes sein. Ebenso kann die Sperreinrichtung auch außerhalb der genannten Getriebe angeordnet sein, beispielsweise in Radnähe oder direkt an den Rädern. Durch den Wegfall der ansonsten speziell für die Feststellfunktion an den Fahrzeugrädern ausgebildeten Reibungsbremsorgane ergeben sich beträchtliche Kosten-, Gewichts- und Platzeinsparungen. So kann insbesondere bei Fahrzeugen mit Scheibenbremsen an der Hinterachse die zusätzliche Bremstrommel für die Feststellbremse entfallen. Auch bei solchen Feststellbremssystemen, die mit eigenen Reibbelägen auf die Bremsscheibe der Betriebsbremsanlage wirken oder bei Betriebsbremsanlagen mit Trommelbremsen an der Hinterachse ergeben sich durch den Wegfall der für die Feststellbremsfunktion erforderlichen Bauteile Vorteile hinsichtlich Platzbedarf, Kosten und Reduzierung der ungefederten Massen. Besonders groß sind die Vorteile bei Fahrzeugen mit Automatikgetriebe, da hier eine derartige "Parksperre" sowieso schon vorhanden ist und somit keine zusätzliche Sperreinrichtung erforderlich ist.

Die Ansprüche 12 bis 19 betreffen vorteilhafte Ausbildungen der Erfindung, bei denen die Feststellbremse als Reibungsbremse ausgebildet ist.

Durch den Wegfall der Notbremsfunktion kann die Feststellbremsanlage ausschließlich auf das Erfordernis "Halten des Fahrzeugs im Stillstand" ausgelegt werden. Dies ermöglicht eine Auslegung der Reibungsbremse in Richtung Selbsthemmung, mit entsprechendem Verstärkungsfaktor C* und für diesen Zweck besonders geeigneten Reibbelägen. Alternativ können die Reibbeläge der Feststellbremsanlage, denen somit nur die Aufgabe zukommt, das Fahrzeug im Stillstand festzusetzen, in größeren Zeitabständen während der Fahrt (für den Fahrer unbemerkt) mit geringer Kraft angelegt werden. Somit wird ein gleichmäßiges Tragbild erreicht und die Leichtgängigkeit der Bremsorgane sichergestellt. Aufgrund der hierdurch gewährleisteten Wirksamkeit und Einsatzbereitschaft der Feststellbremse ist eine entsprechend geringere Dimensionierung ihrer Komponenten möglich.

Durch den Entfall der Hilfsbremsfunktion ist eine deutlich geringere Belastung der Feststell-Reibungsbremse gegeben. Die üblicherweise an die Radbremsen einer Fahrzeugachse gekoppelten beiden Reibungsbremsen der Feststellbremsanlage können deshalb durch eine einzige Reibungsbremse , die beispielsweise zentral an einer der Achsen angeordnet Ist (bei Kraftfahrzeugen mit Hinterradantrieb vorteilhafterweise in Form einer Bremseinrichtung im Hinterachsgetriebe), ersetzt werden. Alternativ besteht die Möglichkeit, die "Parksperre" im Automatikgetriebe durch eine aufgrund der geringen Belastung entsprechend klein bauende Reibungsbremse zu ersetzen. Durch die Reduktion auf eine "zentrale" Reibungsbremse ergeben sich Kosten-, Bauraum- und Gewichtsvorteile, gerade auch hinsichtlich der ungefederten Massen an den Fahrzeugrädern. Dieser Aspekt ist insbesondere bei Fahrzeugen mit Differentialsperre an der Antriebsachse interessant.

Die Reibungsbremsen der Feststellbremsanlage können aber auch in an sich bekannter Weise in die Radbremsen integriert sein. Bei Radbremsen mit einer eigenen Bremstrommel für die Feststellbremse kann die Trommelbremse konstruktiv eindeutig auf Selbsthemmung ausgelegt und dazu das Material der Reibbeläge sowie der Verstärkungsfaktor C* entsprechend gewählt werden. Somit kann eine Bremsenkennlinie, die der Feststellfunktion kompromißlos gerecht wird, realisiert werden. Auch bei Feststellbremsen, die mit eigenen Bremsbelägen auf eine Bremsscheibe der Betriebsbremse wirken, sind keine Kompromisse hinsichtlich des Reibbelages mehr erforderlich.

Durch die Ausgestaltung der Erfindung nach Anspruch 13 wird der Bedienungskomfort deutlich gesteigert. Außerdem bringt der Wegfall des entsprechend groß zu dimensionierenden Handbremshebels bzw. des Feststellpedals Vorteile, da die statt dessen vorzusehende elektrische Betätigungseinrichtung (Taster, Schalter, Potentiometer etc.) wenig Platz beansprucht und an vielerlei Stellen ergonomisch günstig angeordnet werden kann.
So kann beispielsweise die Ansteuerungseinrichtung für die Notbremsanlage nunmehr in Form eines Pedals ähnlich dem Feststellpedal ausgeführt sein, während der Taster für die Feststellbremse an anderer Stelle des Fahrzeuginterieurs angeordnet ist. Alternativ ist auch eine einzige Ansteuerungseinrichtung möglich, indem eine Ansteuerungslogik je nach Fahrsituation (v > 0 - Notbremsung; v = 0 - Feststellen) entweder den Druckerzeuger der Notbremsanlage oder die Fremdkrafteinrichtung für die Feststellbremse ansteuert.

Elektromotoren gemäß Anspruch 14 zeichnen sich durch ihren einfachen Aufbau, ihre Vielseitigkeit sowie ihre Unabhängigkeit von anderen Systemen aus. Ein derartiger Fremdkraftantrieb kann entweder über Seile oder andere Übertragungseinrichtungen mittelbar auf die Reibungsbremsen wirken oder direkt die Bremskolben in Richtung auf die Bremsscheibe hin verstellen. Im erstgenannten Fall kann der Elektromotor auf eine zentrale Reibungsbremse wirken ebenso wie auf beide Radbremsen. Die Bremsscheiben der Radbremsen können dabei über separate Reibbeläge auch für die Feststellung des Kraftfahrzeugs herangezogen werden, ebenso wie dies durch eigene kleine Bremstrommeln für die Feststellbremsanlage möglich ist. Bei Trommelbremsen kann der Elektromotor auch innerhalb der Trommel angeordnet sein.
Die Aufrechterhaltung der Feststellbremskraft nach dem Abschalten des Elektromotors erfolgt in vorteilhafter Weise z. B. durch Getriebehemmung im entsprechend ausgelegten Getriebe des Elektromotors. Alternativ kann auch eine mechanische Arretierung in Form einer Klinke erfolgen, die entweder vom Bediener z. B über einen Bowdenzug eingelegt oder über Fremdkraft, z. B. über einen Hubmagneten, aktiviert werden kann. Ebenso kann die mechanische Arretierung der Feststellbremse auch beispielsweise durch einen Freilaufmechanismus realisiert werden.
Das Lösen der Feststellbremse kann in den oben genannten Fällen beispielsweise dadurch erfolgen, daß zunächst Druck im Betriebsbremssystem aufgebaut wird und anschließend die Arretierung automatisch oder vom Fahrzeugführer veranlaßt gelöst wird.

Die Weiterbildung der Erfindung nach Anspruch 15 verwendet in besonders vorteilhafter Weise einen Druckerzeuger auch für die Feststellung. Selbstverständlich kann als Druckerzeuger dasselbe Aggregat verwendet werden wie in der Notbremsanlage. Es ist jedoch auch uneingeschränkt die Verwendung eines anderen Druckerzeugers möglich. Eine denkbare Konstellation wäre z. B. ein fremdansteuerbarer Bremskraftverstärker für die Feststellfunktion, während für die Notbremsanlage eine ASC-Pumpe eingesetzt wird.

Gemäß Anspruch 16 bringt der Druckerzeuger die volle Feststellkraft auf. Von der Auslegung ergeben sich hierbei keine Probleme, da die üblicherweise hierfür geeigneten Aggregate einen deutlich höheren Hydraulikdruck aufbauen, als für die Feststellfunktion erforderlich ist.
Nach Beendigung des Aufbringens der Feststellkraft muß die Feststellwirkung aufrechterhalten werden. Da dies über einen längeren Zeitraum nicht durch den hydraulischen Druck möglich ist, sind mechanische Einrichtungen vorzusehen, die die Reibbeläge bzw. die Bremskolben in ihrer Wirklage arretieren. Als Arretierungseinrichtungen gemäß Anspruch 18 kommen beispielsweise Sperrklinken (überwiegend fremdkraftbetätigt, mit Hubmagnet) oder ein Freilaufmechanismus in Frage, ebenso wie ein kleiner Elektromotor mit selbsthemmendem Getriebe.

Die Variante der Erfindung nach Anspruch 17 verwendet den Druckerzeuger nur zum teilweisen Spannen der Reibungsbremse. Nach erfolgtem "Vorspannen", z. B. zu 80 % der gewünschten Spannkraft, übernimmt eine Zusatzeinrichtung, beispielsweise ein kleiner Elektromotor mit entsprechender Übersetzung ins Langsame, das "Nachspannen". Da das Fahrzeug durch das über die Hydraulik schnell erfolgte Vorspannen in der Regel bereits ausreichend gegen Wegrollen gesichert ist, kann das Nachspannen auch über einen etwas längeren Zeitraum durchgeführt werden. Somit genügt ein Elektromotor mit entsprechend geringer Leistung. An die Stelle einer eigenen Arretierungseinrichtung zur Aufrechterhaltung der Feststellwirkung kann in vorteilhafter Weise das selbsthemmend ausgelegte Übersetzungsgetriebe des Elektromotors treten (siehe Anspruch 18).

Gemäß Anspruch 19 kann bei Fahrzeugen mit einer Feststellbremse, die auf die Reibbeläge der Betriebsbremse zurückgreift, die "Vorspannkraft" durch Drücken des Pedals der Betriebsbremsanlage aufgebracht werden. Danach wird durch die Zusatzeinrichtung an den betreffenden Rädern, in der Regel nur einer Achse, die endgültige Feststellwirkung erzielt. Vorteil bei dieser Auslegung des Bremssystems ist, daß für die Feststellbremsanlage kein eigenes Druckerzeugungsgerät und kein eigenes Leitungssystem notwendig sind, sondern die Spannkraft direkt über den Betriebsbremskreis aufgebracht wird. Das Nachspannen und Arretieren der Feststellbremse erfolgt wiederum über die Zusatzeinrichtung, beispielsweise einen vergleichsweise kleinen Elektromotor oder aber auch über eine mit Muskelkraft zu betätigende Einrichtung. Hiermit ergibt sich ein besonders geringer Bauaufwand, da das mechanische System zum Nachspannen und Arretieren nurmehr auf sehr geringen Belastungen ausgelegt werden muß, nachdem der Hauptanteil der Spannkraft von der Betriebsbremse aufgebracht wird.

## Patentansprüche

1. Kraftfahrzeug mit einer Betriebs- und einer Feststellbremsanlage, wobei jede Bremsanlage über eine ihr zugeordnete Betätigungseinrichtung betätigt werden kann, sowie mit
- einer Einrichtung zur Erzeugung von Bremsdruck, nachfolgend als Druckerzeuger bezeichnet, und
- einer Reibungsbremse,
die so zusammenwirken, daß durch Betätigen einer Ansteuerungseinrichtung der Druckerzeuger auf die Reibungsbremse wirkt und hierdurch eine Notbremsung eingeleitet werden kann,
dadurch gekennzeichnet, daß eine gemeinsame Ansteuerungs-/Betätigungseinrichtung für die Notbrems- und Feststellbremsanlage vorgesehen ist, die mit Hilfe einer Logikschaltung bei v > 0 durch Ansteuerung des Druckerzeugers eine Notbremsung einleitet, während bei v = 0 die Feststellbremse aktiviert wird.

2. Kraftfahrzeug nach Anspruch 1, mit einem Pedal zur Betätigung der Betriebsbremse,
dadurch gekennzeichnet, daß als Druckerzeuger ein Aggregat der Betriebsbremsanlage vorgesehen ist, das unabhängig vom Pedal der Betriebsbremsanlage angesteuert werden kann.

3. Kraftfahrzeug nach Anspruch 2,
dadurch gekennzeichnet, daß das Aggregat ein Bremskraftverstärker ist.

4. Kraftfahrzeug nach Anspruch 2,
dadurch gekennzeichnet, daß das Aggregat eine Hydraulikpumpe zur Druckbeaufschlagung der Betriebsbremsanlage und/oder der Lenkungsanlage und/oder der Stoßdämpfer ist.

5. Kraftfahrzeug nach Anspruch 2,
dadurch gekennzeichnet, daß das Aggregat eine Hydraulikpumpe für ein System zur Antriebsschlupf- oder Fahrdynamikregelung ist.

6. Kraftfahrzeug nach Anspruch 1,
dadurch gekennzeichnet, daß der Druckerzeuger ein Elektromotor einer elektrischen Betriebsbremsanlage ist.

7. Kraftfahrzeug nach einem der Ansprüche 1 bis 6,
dadurch gekennzeichnet, daß bei einer Notbremsung eine Reduzierung des zur Verfügung stehenden Bremsdruckes erfolgt.

8. Kraftfahrzeug nach einem der vorangegangenen Ansprüche,
dadurch gekennzeichnet, daß ein Bremsregelsystem zur schlupffreien Abbremsung des Kraftfahrzeugs bei einer Notbremsung installiert ist bzw. von der Betriebsbremsanlage übernommen wird.

9. Kraftfahrzeug nach wenigstens einem der vorangegangenen Ansprüche,
dadurch gekennzeichnet, daß als Druckerzeuger eine vom Verbrennungsmotor des Kraftfahrzeuges angetriebene Hydraulikpumpe vorgesehen ist.

10. Kraftfahrzeug nach wenigstens einem der Ansprüche 1-8,
dadurch gekennzeichnet, daß als Druckerzeuger eine mit elektrischer Energie angetriebene Hydraulikpumpe vorgesehen ist.

11. Kraftfahrzeug nach einem der vorangegangenen Ansprüche,
dadurch gekennzeichnet, daß zur Erzeugung der Feststellwirkung im Stillstand des Kraftfahrzeuges eine über Formschluß wirkende Sperreinrichtung im Antriebsstrang des Kraftfahrzeugs vorgesehen ist.

12. Kraftfahrzeug nach wenigstens einem der Ansprüche 1 bis 10,
dadurch gekennzeichnet, daß das (die) Feststellorgan(e) der Feststellbremsanlage als Reibungsbremse(n) ausgebildet ist (sind).

13. Kraftfahrzeug nach Anspruch 12,
dadurch gekennzeichnet, daß die Reibungsbremse(n) der Feststellbremsanlage mit Fremdkraft betätigt wird (werden).

14. Kraftfahrzeug nach Anspruch 13,
dadurch gekennzeichnet, daß ein Elektromotor zum Aufbringen der Fremdkraft vorgesehen ist.

15. Kraftfahrzeug nach Anspruch 13,
dadurch gekennzeichnet, daß ein Druckerzeuger zum Aufbringen der Fremdkraft vorgesehen ist.

16. Kraftfahrzeug nach Anspruch 15,
dadurch gekennzeichnet, daß der Druckerzeuger das Spannen der Reibungsbremse(n) der Feststellbremsanlage bis zum Erreichen der endgültigen Feststellwirkung bewerkstelligt.

17. Kraftfahrzeug nach Anspruch 15,
dadurch gekennzeichnet, daß eine Zusatzeinrichtung vorgesehen ist zur weiteren Erhöhung der Spannkraft nach Beendigung des Spannens bei der Reibungsbremsanlage(n) der Feststellbremsanlage durch den Druckerzeuger.

18. Kraftfahrzeug nach Anspruch 16 und/oder Anspruch 17,
dadurch gekennzeichnet, daß eine Einrichtung zur Arretierung der Feststellbremse vorgesehen ist.

19. Kraftfahrzeug nach wenigstens einem der Ansprüche 15 bis 18, wobei die Feststellbremsanlage auf die Reibbeläge der Betriebsbremse zurückgreift, mit einem Pedal der Betriebsbremse und einem Aggregat zur Druckerzeugung in der Betriebsbremsanlage,
dadurch gekennzeichnet, daß bei Betätigen des Pedals die Fremdkraft vom Aggregat der Betriebsbremsanlage aufgebracht wird.

## Claims

1. A motor vehicle comprising a service-brake and a parking-brake installation, wherein each brake installation can be actuated via an associated actuating device, and also comprising
- a means for generating brake pressure, hereinafter called a pressure generator, and
- a friction brake,
which co-operate so that when a triggering device is actuated the pressure generator acts on the friction brake and can thus initiate emergency braking,
characterised in that a common triggering and actuating means is provided for the emergency-brake and the parking-brake installation and, by means of a logic circuit, initiates emergency braking by triggering the pressure generator when v > 0 but activates the parking brake when v = 0.

2. A vehicle according to claim 1 comprising a pedal for actuating the service brake, characterised in that the pressure generator is a service-brake unit which can be triggered independently of the service-brake pedal.

3. A vehicle according to claim 2, characterised in that the unit is a brake booster.

4. A vehicle according to claim 2, characterised in that the unit is a hydraulic pump for pressurising the service-brake installation and/or the steering installation and/or the shock-absorbers.

5. A vehicle according to claim 2, characterised in that the unit is a hydraulic pump for a system for controlling the drive slip or the vehicle dynamics.

6. A vehicle according to claim 1, characterised in that the pressure generator is an electric motor belonging to an electric service-brake installation.

7. A vehicle according to any of claims 1 to 6, characterised in that during emergency braking the available brake pressure is reduced.

8. A vehicle according to any of the preceding claims, characterised in that a brake control system for slip-free braking the vehicle is installed if emergency braking is provided, or is taken over by the service-brake installation.

9. A vehicle according to any of the preceding claims, characterised in that the pressure generator is a hydraulic pump driven by the vehicle engine.

10. A vehicle according to at least one of claims 1 - 8, characterised in that the pressure generator is a hydraulic pump driven by electric energy.

11. A vehicle according to any of the preceding claims, characterised in that the parking action when the vehicle is at rest is produced by a positive locking means in the vehicle drive line.

12. A vehicle according to at least one of claims 1 to 10, characterised in that the parking means in the parking-brake installation are in the form of one or more friction brakes.

13. A vehicle according to claim 12, characterised in that the one or more friction brakes in the parking-brake system are power-operated.

14. A vehicle according to claim 13, characterised in that an electric motor is provided for the said power operation.

15. A vehicle according to claim 13, characterised in that a pressure generator is provided for power operation.

16. A vehicle according to claim 15, characterised in that the pressure generator tensions the friction brake or brakes of the parking-brake installation until the final parking effect is obtained.

17. A vehicle according to claim 15, characterised in that an additional means is provided for further increasing the tensioning force after the pressure generator has finished tensioning the friction-brake installation or installations belonging to the parking-brake installation.

18. A vehicle according to claim 16 or claim 17, characterised in that a means is provided for locking the parking brake.

19. A vehicle according to at least one of claims 15 to 18, wherein the parking-brake installation acts on the friction linings of the service brake, comprising a service-brake pedal and a unit for generating pressure in the service-brake system, characterised in that when the pedal is actuated the external power is provided by the said unit of the service-brake installation.

## Revendications

1. Véhicule automobile équipé d'une installation de freinage de service et de stationnement, chacune des installations de freinage pouvant être actionnée par une installation de manoeuvre associée ainsi qu'
- une installation pour générer la pression de frein, appelée générateur de pression, et
- un frein à friction,
ces moyens coopérant de façon que par l'actionnement d'une installation de commande, le générateur de pression agit sur les freins à friction et permet ainsi d'induire un freinage de secours,
caractérisé par
une installation de commande/actionnement commune à l'installation de freinage de secours et à l'installation de frein de stationnement, qui, à l'aide d'un circuit logique pour v > 0, induit le freinage de secours en commandant le générateur de pression alors que pour v = 0, elle active le frein de stationnement.

2. Véhicule automobile selon la revendication 1, équipé d'une pédale pour actionner le frein de service,
caractérisé en ce que
le générateur de pression est une unité de l'installation de freinage de service qui peut être commandée indépendamment de la pédale de l'installation de freinage de service.

3. Véhicule automobile selon la revendication 2,
caractérisé en ce que
l'unité est un amplificateur de force de freinage.

4. Véhicule automobile selon la revendication 2,
caractérisé en ce que
l'unité est une pompe hydraulique pour fournir de la pression à l'installation de freinage de service et/ou à l'installation de direction et/ou aux amortisseurs.

5. Véhicule automobile selon la revendication 2,
caractérisé en ce que
l'unité est une pompe hydraulique pour un système de régulation du patinage à l'entraînement ou de la dynamique de roulement.

6. Véhicule automobile selon la revendication 1,
caractérisé en ce que
le générateur de pression est un moteur électrique d'une installation électrique de freinage de service.

7. Véhicule automobile selon l'une des revendications 1 à 6,
caractérisé en ce qu'
en cas de freinage de secours, on réduit la pression de freinage disponible.

8. Véhicule automobile selon l'une quelconque des revendications précédentes,
caractérisé en ce que
un système de régulation de freinage pour freiner le véhicule sans patinage est monté dans l'installation de secours ou est assuré par l'installation de freinage de service.

9. Véhicule automobile selon l'une quelconque des revendications précédentes,
caractérisé en ce que
le générateur de pression est une pompe hydraulique entraînée par le moteur à combustion interne du véhicule.

10. Véhicule automobile selon l'une quelconque des revendications 1 à 8,
caractérisé en ce que
le générateur de pression est une pompe hydraulique entraînée par énergie électrique.

11. Véhicule automobile selon au moins l'une quelconque des revendications précédentes,
caractérisé en ce que
la ligne de transmission du véhicule comporte une installation de verrouillage agissant par une liaison de forme pour générer l'effet d'immobilisation à l'arrêt du véhicule.

12. Véhicule automobile selon l'une quelconque des revendications 1 à 10,
caractérisé en ce que
le ou les organes d'immobilisation de l'installation de frein de stationnement sont un ou plusieurs freins à friction.

13. Véhicule automobile selon la revendication 12,
caractérisé en ce que
le (ou les) frein(s) à friction de l'installation de frein de stationnement est (ou sont) actionné(s) par une force extérieure.

14. Véhicule automobile selon la revendication 13,
caractérisé en ce qu'
un moteur électrique fournit la force extérieure.

15. Véhicule automobile selon la revendication 13,
caractérisé par
un générateur de pression pour appliquer la force extérieure.

16. Véhicule automobile selon la revendication 15,
caractérisé en ce que
le générateur de pression assure le serrage du ou des freins à friction de l'installation de frein de stationnement jusqu'à l'effet d'immobilisation définitive.

17. Véhicule automobile selon la revendication 15,
caractérisé par
une installation complémentaire pour continuer d'augmenter la force de serrage à la fin du serrage dans le cas d'une installation de freinage à friction de l'installation de frein de stationnement par le générateur de pression.

18. Véhicule automobile selon l'une quelconque des revendications 16 et/ou 17,
caractérisé par
une installation pour bloquer le frein de stationnement.

19. Véhicule automobile selon l'une quelconque des revendications 15 à 18, dans lequel l'installation de frein de stationnement utilise les garnitures de friction du frein de service, comprenant une pédale du frein de service et une unité pour générer la pression dans l'installation de freinage de service,
caractérisé en ce qu'
en actionnant la pédale, l'unité applique la force externe à l'installation de freinage de service.
